# EUROPEAN PATENT APPLICATION

(11) **EP 4 759 104 A1**
(43) Date of publication of application: **17.06.2026**
(21) Application number: 25221805.2
(22) Date of filing: 09.12.2025
(51) Int. Cl.: A01B 39/18, A01B 77/00, A01M 21/00

(54) **METHOD FOR REMOVING INVASIVE PLANT SPECIES FROM SOIL**

(30) Priority: 10.12.2024 NL 2039287
(71) Applicant: Castelein, Anne Hendrik, 9062 HT Oentsjerk (NL)
(72) Inventor: Castelein, Anne Hendrik, 9062 HT Oentsjerk (NL)
(74) Representative: Arnold & Siedsma

(57) **Abstract**

The present invention relates to a method for removing invasive plant species from soil. Such invasive plant species could for example be Japanese knotweed, hogweed, or any other unwanted species of plants present in a quantity of soil. The method comprises the steps of transferring soil from a first location to a second location, wherein the soil comprises at least one invasive plant species; spreading soil at the second location such that a layer is formed that has a predetermined thickness after spreading; and letting animals roam around in or on the layer of soil to feed upon the invasive plant species in the soil.

## Description

The invention relates to a method for removing invasive plant species from soil. Such invasive plant species could for example be Japanese knotweed, hogweed, or any other unwanted species of plants present in a quantity of soil.

There are methods for controlling invasive plant species known in the art.
WO 2006/103478 A1 relates to a method for controlling fallopian japonica, or Japanese Knotweed, which involves the preliminary steps of identifying a target Japanese Knotweed, Giant Knotweed or hybrid plant and characterising its growth phase as either "growing" or "dormant". The environmental situation of the target plant is then assessed and characterised as either "near trees" "near watercourse" or "clear". A herbicidal formulation appropriate to the characterised growth phase and environmental situation is then selected. Treatment of the target plant then involves both applying the herbicidal formulation to the plant and stimulating the growth of the plant so as to promote translocation of the applied herbicidal formulation throughout the target plant's rhizome system.

Another method is by burning the soil, thus killing all invasive plant species. However, like using pesticides or other chemicals, this greatly reduces the fertility of the soil, thus reducing the ability to cultivate desired plants species on said soil.

A less harmful method exists in which pigs, or other animals, are brought to a pasture in which Japanese knotweed or other invasive plant species grow. As the roots of knotweed tastes somewhat like rhubarb, the pigs are inclined to eat it when grazing the fields, thus removing it from the soil. However, as the roots of the knotweed can grow very deep, it can prove difficult, or even impossible, to completely remove the knotweed from the ground this way.

It is therefore an object of the invention to at least partially solve these problems. More specifically, it is an object of the invention to provide a method that can more effectively remove invasive plant species from the soil, while keeping said soil fertile.

The object is achieved by a method of removing invasive plant species from soil, the method comprising the steps of:
- transferring soil from a first location to a second location, wherein the soil comprises at least one invasive plant species;
- spreading soil at the second location such that a layer is formed that has a predetermined thickness after spreading; and
- letting animals roam around in or on the layer of soil to feed upon the invasive plant species in the soil.

By relocating the soil, a layer can be created having a thickness which pigs or other animals can reach in its entirety, thus allowing them to remove more of the invasive plant species than when the pigs have to dig around themselves in soil when it is present in the first location, in which case they can only reach a limited depth. This has as its advantage that the invasive plant species can even be entirely removed from the soil. It is noted that the term soil herein, and throughout the rest of this disclosure, can mean any type of material that could house an invasive plant species e.g. clay, loam, peat, loess, sand, black soil, etc. The invention is thus not only limited to generic black soil or any other specific type of material.

The first location could for example be a plot of farmland, which has been invaded by an invasive plant species such as Japanese knotweed, and is therefore less suitable for cultivation. However, using chemicals or burning the ground would severely limit the fertility of the ground, thus rendering it unusable for cultivation as well.

The second location can be any location that is suitable for spreading the soil in the predetermined thickness. However, it is advantageous if the second location in a sufficiently large flat area. This can aid in achieving the predetermined thickness across all of the soil.

In an embodiment the predetermined thickness of the layer of soil is at most 50 centimetres, preferably at most 30 centimetres, even more preferably at most 20 centimetres.

Preferably the abovementioned thicknesses are a maximum thickness, but alternatively this can also mean an average thickness with a maximum variation of for example 10%, 20% or 30%. The thinner the layer of soil is, the easier the animals can dig through the entire layer of soil and thus remove all of the invasive plant species and their roots.

In an embodiment transferring the soil comprises removing the soil from the first location, wherein the soil that is removed extends from a surface to a predetermined depth.

The surface may mean the upper side of the soil, in other words, the (layer of) soil that meets the air/atmosphere. While in some cases the soil may have already been dug up before the start of the method and is transferred from a storage, generally it is more likely that the soil is still in the ground. As the invasive plants species usually have roots that can grow quite deep, the soil will have to be dug up to ensure that the roots will also be removed from the ground. Therefore, the soil will be removed from the surface of the ground, up to a predetermined depth, wherein the predetermined depth can differ depending on the specific invasive plant species.

In an embodiment the predetermined depth is at least 2 metres, preferably at least 3 metres, more preferably at least 4 metres, and most preferably at least 5 metres.

Alternatively, the predetermined depth is at most 2 metres, preferably at most 3 metres, more preferably at most 4 metres, and most preferably at most 5 metres. It is noted that any range of the abovementioned depths is also possible. For example, the predetermined depth may be in the range of 2-4 metres, or 3-5 metres. It is clear for the skilled person that all other combination also fall under the scope of the present disclosure.

An advantage of the abovementioned depths is that the odds of removing the majority of the invasive plants species can be increased, reducing the chance of the invasive plant species returning quickly. It is even more advantageous if the predetermined depth is such that all roots of the invasive plant species are removed at the step of removing the soil from the first location.

In an embodiment the predetermined thickness is smaller than the predetermined depth.

A predetermined thickness that is smaller than the predetermined depth will increase the ability of animals to reach more of the invasive plant species, and thus can lead to a thorough removal of said invasive plant species.

In an embodiment the ratio between the predetermined thickness and the predetermined depth is greater than 4, preferably greater than 8, and most preferably greater than 10. That is to say, it is most beneficial if the predetermined depth is at least 10 times as thick as the predetermined thickness.

The method can further comprise an additional step of storing the soil at a third location. This third location could for example be a silo, in which the soil can be stored for a prolonged period of time. This time can be used to dry the soil, or as a buffer between other steps of the method. It is especially advantageous if during this storage, the soil is stored together with garden waste. During the storage, this garden waste will compost and mix with the soil, thus enhancing the fertility of the soil and creating higher quality soil. It is noted that the term garden waste herein is not limited to actual garden waste but could refer to any biological material that can be used to enhance the fertility of the soil. One such example could be wood chips. More specifically, the garden waste that is preferably used in this step of the method is chopped and/or shredded green waste.

It is noted that storing the soil at a third location can be done either before or after spreading the soil at the first location.

In an embodiment the step of storing the soil is performed at least two times, at different points throughout the process, such as once directly after having the animals feeding upon the soil, and once at the end of the process. In this case, the soil can be stored at the same location multiple times, but could also be stored at different locations in the first and second, second and third, etc. rounds of storage.

In an embodiment the soil is stored for at least a week, preferably at least two weeks. This is especially beneficial if this prolonged storage happens during the final time the soil is stored.

While a single round of animal feeding could be sufficient for some purposes of the soil, or for less invasive species of plant, for a thorough cleaning it can be beneficial for the method to further comprise an additional round of animal feeding. Therefore, it is possible for the method to comprise the further steps of:
- spreading said soil in a layer of a predetermined thickness a second time;
- letting animals roam around the layer of soil to feed upon the invasive plant species a second time; and
- having the animals fertilise the soil.

The principle of the feeding remains unchanged from the first round to this round. It is noted that while the same animals as in the first round can be used, it is also possible to, additionally or alternatively, use different (species of) animals. For example, if large animals were used in the first round, smaller animals can be used in the second round to remove pieces that were not noticed, or too small to be of interest, by the larger animals. It is noted that if the step of storing the soil is performed at least two times, it can be advantageous to have a round of storage after each round of having animals feeding upon the soil. Furthermore, it is noted that if not all of the invasive plant species has been removed after a second round of feeding, these steps could be repeated until the desired level of removal has been achieved.

In an embodiment the method further comprises sieving the soil.

The sieving can for example be done at the start of the process, in order to remove any large objects, such as stones or large parts of plants from the soil. It can however also be performed later during the process, either to remove the large objects, or to remove excrement of the animals from the soil. Note that these are just examples and not an exhaustive list of options.

In an embodiment an additional step of the method is performing a quality check on the soil. After the animals have fed upon the soil and removed as much of the invasive plant species as possible, a quality check can be performed, for example, but not limited to, to examine whether any of the invasive plant species remain in the soil, or to check for fertility levels of the soil. While this quality check will generally be performed towards the end of the method, it is also possible perform this check at other times throughout the process. For example, it can be used to check whether a second round of spreading the soil and having animal feed upon it for a second time is necessary, or a single round is sufficient. Furthermore, it could be performed multiple times throughout the storage of the soil at the third location and be used to check whether the soil has reached a predetermined threshold of dryness and can thus continue to the next step of the method. Another possibility is an initial check, even before the animals have fed upon the soil, to establish a baseline quality for that batch of soil.

In an embodiment the method further comprise the step of moving the soil to a fourth location. It is noted that moving the soil to the fourth location can mean returning the soil to its original (first) location. However, it is also possible to move it to a location that still comprises soil invaded by undesired plant species. That soil can be dug up to be used in the method, after which the processed soil can be put in place, thus creating a soil-trading service.

The method can be performed by any number or species of animals. However, some species might work better than others, depending on the invasive plants species, as that species of animal might have a larger interest in said plant species. An example of this is the root of the Japanese knotweed, which is especially well-liked by pigs. Furthermore, it is possible to use a first species of animals in the first round of feeding, and a second species of animals in the second round.

Additionally or alternatively, multiple species of animals can be used at the same time. As an example, during the first round pigs can be used to perform the feeding. In the second round, a combination of pigs and chickens can be used. While the method could theoretically be performed using any type of animals, generally any or more of the following can be used: pigs, chickens, cattle and goats.

It can be especially useful if the second location and/or third location are located in a building, e.g. a shed, a barn, a silo, or any other type of building suitable for holding the soil. The building can aid in shielding the soil from weather effects. Furthermore, certain aspects, such as the temperature or humidity, can be controlled more easily, which can improve aspects of the soil. One exemplary option is during the storing of the soil together with garden waste, for which certain conditions can increase the rate of composting, thus reducing the time needed to store the soil.

In an embodiment the building comprises a floor, preferably a flat floor, wherein the soil is spread over the floor. This can help achieve the desired predetermined thickness. Furthermore, a floor can ensure the soil does not mix with any other material, such as other ground, and can accordingly ease the process of removing all of the invasive plant species. Finally, a flat floor can reduce the effort animals have in reaching the entirety of the soil, and can help ensuring that all of the soil will be cleansed. Said floor is preferably a liquid-tight floor, such as a concrete or an asphalt floor. It is noted that even if second and third locations are not located within a building, but rather are outside, it is still preferred to perform the method on such a liquid-tight floor.

In an embodiment the second location and/or third location are provided with a floor, preferably a flat floor, wherein the soil is spread over the floor. Said floor is preferably a liquid-tight floor, such as a concrete or an asphalt floor. This floor has similar advantages as described for the building.

The invention will be further elucidated with reference to the attached drawings, in which:
Figure 1 shows schematically a first round of having animals feed upon soil comprising an invasive plant species;
Figure 2 shows schematically a second round of having animals feed upon the soil of figure 1;
Figure 3 shows schematically a cross section of ground, comprising soil in which an invasive plant species is present; and
Figure 4 shows schematically the steps of a method of removing an invasive plant species from soil.
Throughout the figures, like elements will be referred to using like reference numerals.

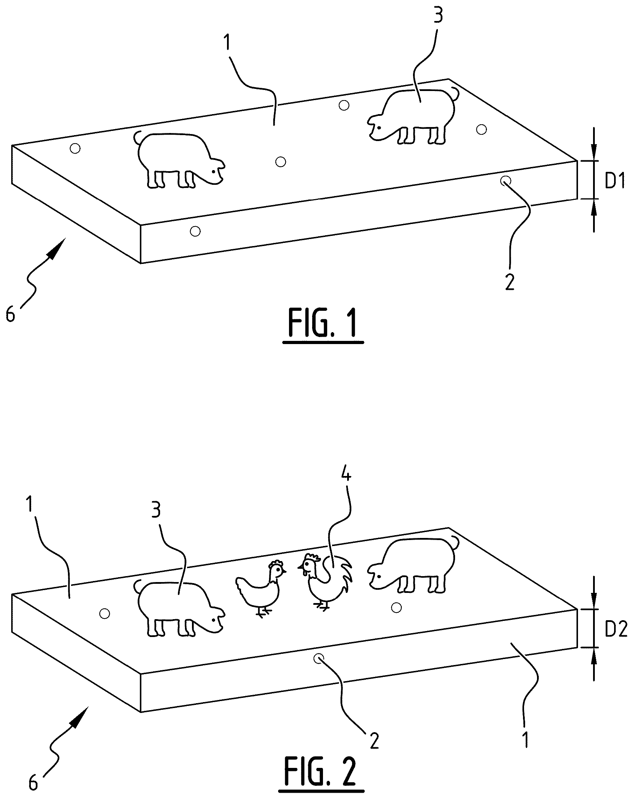

Figure 1 shows a second location 6 on which soil 1, which comprises an invasive plant species 2, has been spread. While in this depiction the soil is generic soil, it could for example also be other forms, such as clay, loam, peat, loess, sand, etc. The soil has been spread on a liquid-tight floor, so that it does not mix with any underlying ground or other material. Furthermore, this ensures the soil will stay moist, rather than drying out by moisture seeping down into the ground below the layer of soil. While the invasive plant species 2 has been depicted as nodes in this and the following figures, in reality it is likely that the invasive plant species comprise an interconnected system of roots, leaves and other parts spread throughout the soil. The layer of soil has a predetermined thickness D1. The soil 1 comes from a different location, such as any spot of ground from which it has been dug up, or a storage location from which it has been transferred to this location. Animals 3 are roaming around the soil 1, in order to consume the invasive plant species. This way, the invasive plant species is removed from the soil, without greatly reducing the fertility of the soil 1 as would have happened by adding chemicals or burning the soil. The animals 3 in this case are pigs 3.

The predetermined thickness D1 of the soil is chosen such that the pigs can easily reach the bottom of the layer, and thus can consume all of the invasive plant species without any remaining at a depth that the pigs 3 cannot reach. In this example, predetermined thickness D1 is set at 20 centimetres.

In some cases, one round of feeding is insufficient to remove the desired amount of invasive plant species, and a second round is required. Figure 2 shows such a second round, in which once again the soil 1 has been spread around, and animals 3, 4 are roaming around the soil. While there is still some part of the invasive plant species 2 present in the soil, the amount is less than in figure 1 as the animals 3 have already consumed some of the invasive plant species 2. The soil 1 again has a predetermined thickness D2, which in this case is equal to the predetermined thickness D1. It is noted however, that a different thickness could be used depending on for example the species of animals used. In this case, both pigs 3 and chickens 4 are used. Between the first and second rounds of feeding, the soil 1 has been stored, together with garden waste, in order to create compost and raise the fertility of the soil. During the second round of feeding, the animals 3, 4 can freely leave their excrement on and in the soil 1, leading to even more fertile soil. It is noted that this in theory could also happen during the first round of feeding.

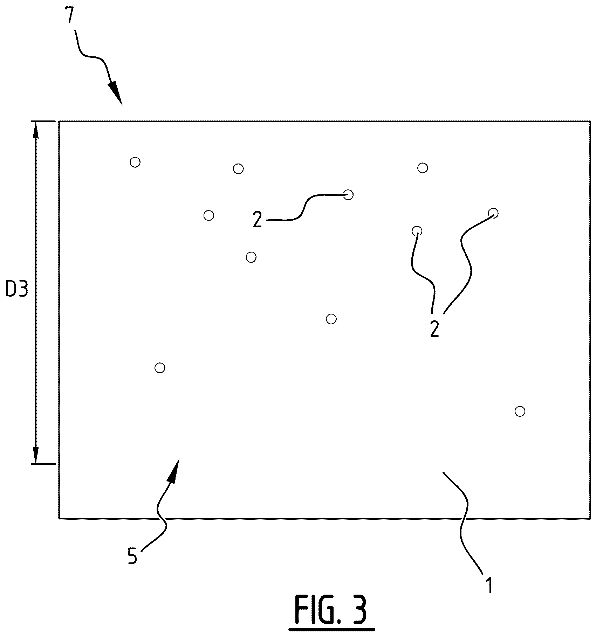

Figure 3 shows a cross section of a first location 5, of which the soil 1 comprises an invasive plant species 2. In order to transfer the soil 1 from this first location 5 to a second location 6 (shown in figures 1 and 2), the soil will have to be dug up. The soil 1 will be dug up from the surface 7, up to a predetermined depth D3. While the invasive plant species 2 has a higher presence closer to the surface, there are still some roots and/or other parts present deeper in the soil 1, which if left unchecked could lead to a resurgence of the invasive plant species 2 even if it is removed from the top layer of soil 1. Therefore, predetermined depth D3 has been chosen sufficient such that all of the invasive plant species 2 will be included when removing the soil 1 from the first location.

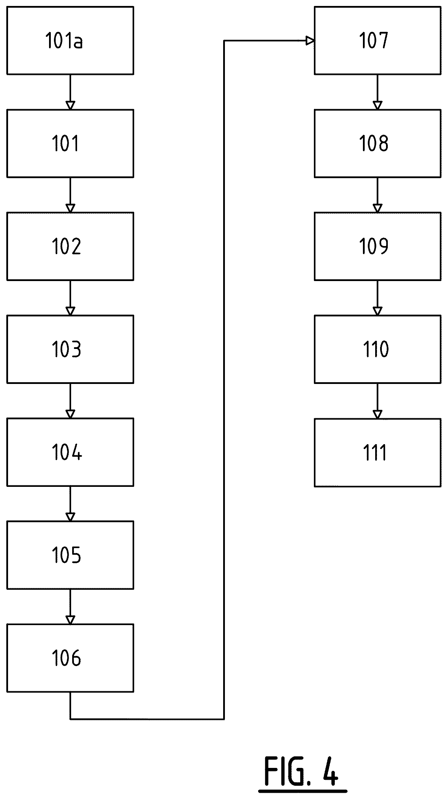

Figure 4 shows an embodiment of the full method, wherein it comprises all optional steps in the process. The method starts by digging 101a up soil from a first location, wherein the soil comprises at least one invasive plant species. The soil is then transferred 101 from said first location to a second location. After this, the soil is spread 102 at the second location such that a layer is formed that has a predetermined thickness after spreading. Next, animals are released to roam around 103 in or on the layer of soil to feed upon the invasive plant species in the soil.

After this, the soil is stored 104 at a third location, in this case a building such as a silo. During this storage, the soil is mixed with garden waste, such as shredded wood chips, in order to enhance the fertility of the soil. In order to ensure an even more thorough removal of the invasive plant species, a second round of feeding is performed in this embodiment.

Therefore, the soil is spread 105 in a layer of a predetermined thickness a second time, after which the animals are let to roam 106 around the layer of soil to feed upon the invasive plant species a second time. During this round, the animals can relieve themselves freely in the soil. This way, the soil is fertilised 107 by the animals.

After this second round of feeding, the soil is stored 108 at a third location a second time. This storage can last for around two weeks. After the soil has dried sufficiently, it will be sieved 109 in order to remove any large parts from the remaining soil. Finally, a quality check is performed 110 on the soil.

After this, the soil is considered clean of invasive plant species. Therefore, the soil can be moved 111 to a fourth location. In this embodiment, this means returning the soil to the original first location, but depending on the purpose of the soil this fourth location can be any desired location. It is noted that this embodiment is but one of many suitable orders in which the steps listed can be performed. The present invention is not limited to the embodiment shown, but extends also to other embodiments falling within the scope of the appended claims.

It is noted that terms like "preferably", "generally" and "typically" are not utilized herein to limit the scope of the claims or to imply that certain features are critical, essential, or even important to the structure or function of the claims. Rather, these terms are merely intended to highlight alternative or additional features that may or may not be utilized in a particular embodiment of the present disclosure. Likewise, for the purposes of describing and defining the present disclosure, it is noted that the terms "substantially" and "approximately" and their variants are utilized herein to represent the inherent degree of uncertainty that may be attributed to any quantitative comparison, value, measurement or other representation, as well as to represent the degree by which a quantitative representation may vary without resulting in a change in the basic function of the subject matter at issue.

While certain representative embodiments and details have been shown for purposes of illustrating the present disclosure, it will be apparent to those skilled in the art that various changes may be made without departing from the scope of the disclosure, which is defined in the appended claims.

Furthermore, it is noted that the steps of the method as listed herein can theoretically be performed in any suitable order. However, the preferred order is the same order as in which the steps are introduced. Any other steps, which have not been discussed throughout this document, can be interjected between other steps in order to further increase the efficiency of the method.

## Claims

1. Method of removing invasive plant species from soil, the method comprising the steps of:
- transferring soil from a first location to a second location, wherein the soil comprises at least one invasive plant species;
- spreading the soil at the second location such that a layer is formed that has a predetermined thickness after spreading; and
- letting animals roam around in or on the layer of soil to feed upon the invasive plant species in the soil.

2. Method according to claim 1, wherein the predetermined thickness of the layer of soil is at most 50 centimetres, preferably at most 30 centimetres, even more preferably at most 20 centimetres.

3. Method according any of the preceding claims, wherein the step of transferring the soil comprises removing the soil from the first location, wherein the soil that is removed extends from a surface to a predetermined depth.

4. Method according to claim 3, wherein the predetermined depth is at least 2 metres, preferably at least 3 metres, more preferably at least 4 metres, and most preferably at least 5 metres.

5. Method according to any of claim 3 - 4, wherein the predetermined depth is such that all roots of the invasive plant species are removed at the step of removing the soil from the first location.

6. Method according to any of claims 3 - 5, wherein the predetermined thickness is smaller than the predetermined depth, wherein optionally the ratio between the predetermined thickness and the predetermined depth is greater than 4, preferably greater than 8, and most preferably greater than 10.

7. Method according to any of the preceding claims, wherein the method further comprises the step of:
- storing the soil at a third location, wherein optionally during the step of storing the soil at a third location, the soil is stored together with garden waste, for example chopped and/or shredded green waste.

8. Method according to claim 7, wherein the step of storing the soil is performed at least two times.

9. Method according to claim 8, wherein during the step of storing the soil a second time, the soil is stored for at least a week, preferably for at least two weeks.

10. Method according to any of the preceding claims, wherein the method further comprises the steps of:
- spreading said soil in a layer of a predetermined thickness a second time;
- letting animals roam around in or on the layer of soil to feed upon the invasive plant species a second time; and
- having the animals fertilise the soil.

11. Method according to any of the preceding claims, wherein the method further comprises the step of:
- sieving the soil.

12. Method according to any of the preceding claims, wherein the method further comprises the step of:
- performing a quality check on the soil.

13. Method according to any of the preceding claims, wherein the method further comprises the step of:
- moving the soil to a fourth location.

14. Method according to any of the preceding claims, wherein the animals feeding upon the invasive plant species are any or more of the followings: pigs, chickens, cattle and goats.

15. Method according to any of the preceding claims, wherein the second and/or third location are located in a building, wherein optionally the building comprises a floor, preferably a flat floor, wherein the soil is spread over the floor.
